# EUROPEAN PATENT APPLICATION

(11) **EP 4 557 006 A1**
(43) Date of publication of application: **21.05.2025**
(21) Application number: 24212011.1
(22) Date of filing: 11.11.2024
(51) Int. Cl.: G03G 5/05, G03G 5/147

(54) **ELECTROPHOTOGRAPHIC PHOTOSENSITIVE MEMBER, PROCESS CARTRIDGE, AND ELECTROPHOTOGRAPHIC APPARATUS**

(30) Priority: 15.11.2023 JP 2023194622
(71) Applicant: CANON KABUSHIKI KAISHA, Tokyo 146-8501 (JP)
(72) Inventor: SHINOZUKA, Masayuki, Tokyo, 146-8501 (JP); KANO, Norihiro, Tokyo, 146-8501 (JP); TAKEUCHI, Eileen, Tokyo, 146-8501 (JP)
(74) Representative: TBK

(57) **Abstract**

An electrophotographic photosensitive member, which is excellent in cleaning property and durability, and in which residual potential is reduced and occurrence of a crack is suppressed. In the electrophotographic photosensitive member including a surface layer, the surface layer contains: a binder resin; and organic resin particles, the binder resin has a specific structural unit, and the organic resin particles are each subjected to surface treatment with a specific compound.

## Description

### BACKGROUND

### Field

The present disclosure relates to an electrophotographic photosensitive member, a process cartridge including the electrophotographic photosensitive member, and an electrophotographic apparatus including the electrophotographic photosensitive member.

### Description of the Related Art

As an electrophotographic photosensitive member to be mounted onto an electrophotographic apparatus, there is widely used an electrophotographic photosensitive member containing an organic photoconductive substance (charge-generating substance). In recent years, an improvement in mechanical durability (abrasion resistance) of the electrophotographic photosensitive member has been required for the purposes of lengthening the lifetime of the electrographic photosensitive member and improving image quality at the time of repeated use thereof.

An example of a technology of improving the abrasion resistance of the electrophotographic photosensitive member is a method including incorporating resin particles into the surface layer of the electrophotographic photosensitive member to reduce friction between the surface layer and a contact member such as a cleaning blade. In Japanese Patent Application Laid-Open No. H06-332219, there is a disclosure of a technology including forming a surface layer through use of a dispersion liquid of fluorine atom-containing resin particles such as polytetrafluoroethylene resin particles as a coating liquid for a surface layer.

In addition, in consideration of an influence on an environment, an electrophotographic photosensitive member including a material free of a fluorine atom is desired. In each of Japanese Patent Application Laid-Open No. 2010-14793 and Japanese Patent Application Laid-Open No. 2021-165805, there is a disclosure of a technology including using resin particles free of a fluorine atom to reduce friction between a surface layer and a contact member such as a cleaning blade.

However, according to the investigations made by the inventors of the present disclosure, in each of the technologies disclosed in Japanese Patent Application Laid-Open No. 2010-14793 and Japanese Patent Application Laid-Open No. 2021-165805, deterioration of residual potential or occurrence of a crack has been caused in some cases as compared to the case where the fluorine atom-containing resin particles are used, though a surface layer excellent in cleaning property and abrasion resistance is obtained.

### SUMMARY

Thus, the present disclosure provides an electrophotographic photosensitive member that can suppress deterioration of residual potential or occurrence of a crack while satisfactorily maintaining a cleaning property and abrasion resistance even in an electrophotographic photosensitive member free of a fluorine atom.

This is achieved by the present disclosure described below. That is, according to one aspect of the present disclosure, there is provided an electrophotographic photosensitive member including a surface layer, wherein the surface layer contains a binder resin, and organic resin particles, wherein the binder resin contains a resin having a structural unit represented by the following formula (A) or (B), and wherein the organic resin particles are each subjected to surface treatment with a compound represented by the following formula (C) or (D):

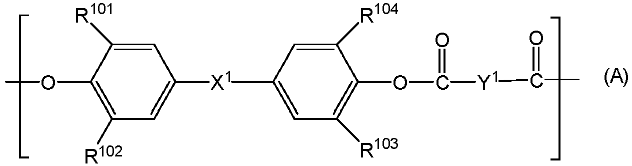

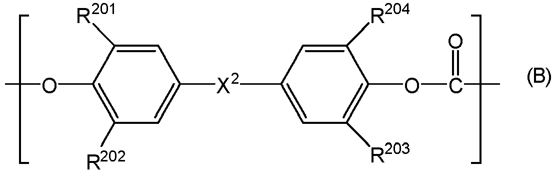

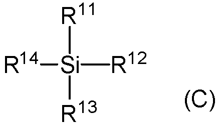

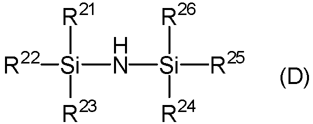

In the formula (A), R¹⁰¹ to R¹⁰⁴ each independently represent a hydrogen atom or a methyl group, X¹ represents a methylene group that may have an alkyl group or a phenyl group as a substituent, a cyclohexylidene group, an oxygen atom, or a single bond, and Y¹ represents a m-phenylene group, a p-phenylene group, or a divalent group obtained by bonding two p-phenylene groups through an oxygen atom.

In the formula (B), R²⁰¹ to R²⁰⁴ each independently represent a hydrogen atom or a methyl group, and X² represents a methylene group that may have an alkyl group or a phenyl group as a substituent, a cyclohexylidene group, an oxygen atom, or a single bond.

In the formula (C), R¹¹ to R¹⁴ each independently represent an alkyl group, a phenyl group, an alkoxy group, or a halogen atom, provided that at least one of R¹¹ to R¹⁴ represents an alkoxy group or a halogen atom.

In the formula (D), R²¹ to R²⁶ each independently represent an alkyl group or a phenyl group.

In addition, according to another aspect of the present disclosure, there is provided a process cartridge including: the electrophotographic photosensitive member; and at least one unit selected from the group consisting of: a charging unit; a developing unit; and a cleaning unit, the process cartridge integrally supporting the electrophotographic photosensitive member and the at least one unit, and being detachably attachable to a main body of an electrophotographic apparatus.

In addition, according to another aspect of the present disclosure, there is provided an electrophotographic apparatus including: the electrophotographic photosensitive member; a charging unit; an image exposing unit; a developing unit; and a transfer unit.

Further features of the present disclosure will become apparent from the following description of exemplary embodiments with reference to the attached drawings.

### BRIEF DESCRIPTION OF THE DRAWINGS

FIG. 1 is a schematic view for illustrating an example of the configuration of an electrophotographic photosensitive member.
FIG. 2 is a view for illustrating an example of the schematic configuration of an electrophotographic apparatus including a process cartridge including the electrophotographic photosensitive member.

### DESCRIPTION OF THE EMBODIMENTS

The present disclosure is described in detail below by way of exemplary embodiments.

The inventors of the present disclosure have made an investigation, and as a result, have found that in a related-art surface layer using a configuration containing a binder resin and organic resin particles free of fluorine, there is a risk in that an interfacial state between the binder resin and each of the resin particles is unstable as compared to fluorine-containing resin particles. Thus, deterioration of residual potential or occurrence of a fine crack have been caused in some cases.

To solve the above-mentioned technical disadvantage that has occurred in the related art, the inventors of the present disclosure have made an investigation on a configuration of a material to be incorporated into the surface layer.

As a result of the above-mentioned investigation, the inventors have found that the use of the following electrophotographic photosensitive member according to the present disclosure can solve the above-mentioned technical disadvantage.

That is, the electrophotographic photosensitive member according to the present disclosure includes a surface layer, and is characterized in that the surface layer contains: a binder resin; and organic resin particles, that the binder resin contains a resin having a structural unit represented by the following formula (A) or (B), and that the organic resin particles are each subjected to surface treatment with a compound represented by the following formula (C) or (D): 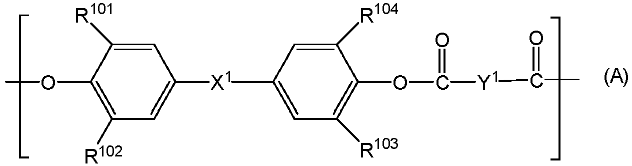 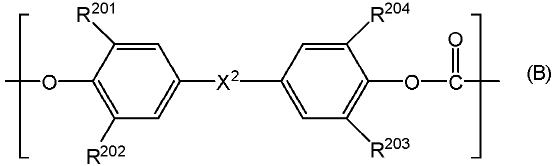 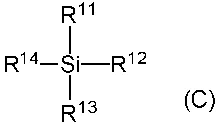 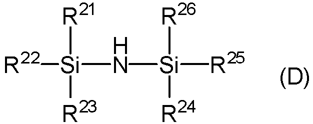 in the formula (A), R¹⁰¹ to R¹⁰⁴ each independently represent a hydrogen atom or a methyl group, X¹ represents a methylene group that may have an alkyl group or a phenyl group as a substituent, a cyclohexylidene group, an oxygen atom, or a single bond, and Y¹ represents a m-phenylene group, a p-phenylene group, or a divalent group obtained by bonding two p-phenylene groups through an oxygen atom; in the formula (B), R²⁰¹ to R²⁰⁴ each independently represent a hydrogen atom or a methyl group, and X² represents a methylene group that may have an alkyl group or a phenyl group as a substituent, a cyclohexylidene group, an oxygen atom, or a single bond; in the formula (C), R¹¹ to R¹⁴ each independently represent an alkyl group, a phenyl group, an alkoxy group, or a halogen atom, provided that at least one of R¹¹ to R¹⁴ represents an alkoxy group or a halogen atom; and in the formula (D), R²¹ to R²⁶ each independently represent an alkyl group or a phenyl group.

The inventors of the present disclosure have conceived the mechanism via which the configuration of the present disclosure can solve the above-mentioned technical disadvantage in the related art to be as described below.

There is a risk in that a partial variation in degrees occurs in an interaction between the binder resin and each of the resin particles at an interface therebetween in accordance with the compatibility of, for example, stereoscopic structures of the binder resin and each of the organic resin particles, or localization of electrons thereof. The inventors of the present disclosure have assumed that, because of the difference in interfacial state between the resin and the particles, a trap site causing a residual potential is formed, or unevenness occurs in the state of close contact with the binder resin to cause a crack.

It is conceived that, in the combination of the binder resin and the organic resin particles in the related art, particularly in a surface of each of non-fluorine-based resin particles, a partial difference in stereoscopic structure between, or the localization of electrons of, the structural units thereof tends to increase, and hence the difference in interfacial state caused by the combination with the binder resin tends to increase. In view of the foregoing, the inventors have assumed that deterioration of residual potential or occurrence of a crack can be suppressed by subjecting each of the organic resin particles to surface treatment with, for example, a compound represented by the formula (C) to uniformize an interfacial state with, for example, a binder resin having a structure represented by the formula (A).

### <Electrophotographic Photosensitive Member>

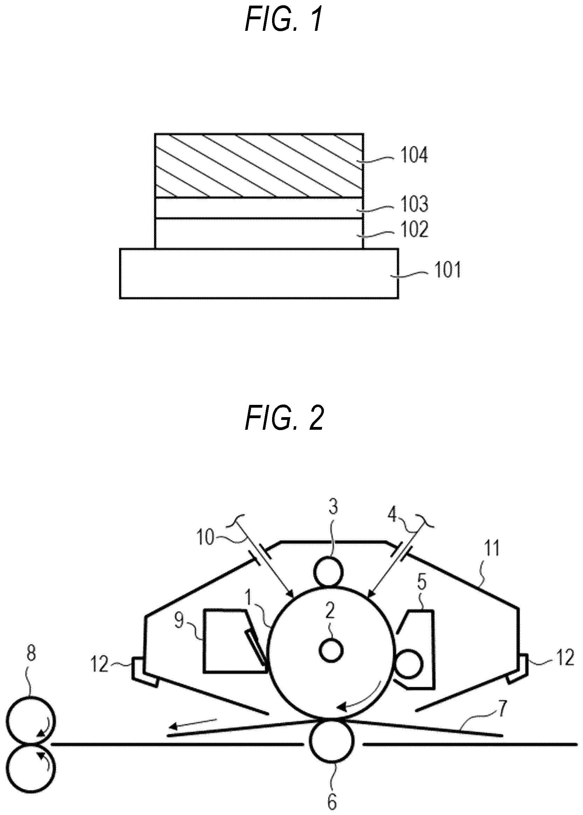

An example of the layer configuration of the electrophotographic photosensitive member of the present disclosure is illustrated in FIG. 1. In FIG. 1, an undercoat layer 102, a charge-generating layer 103, and a charge-transporting layer 104 are laminated on a support 101. A photosensitive layer may include a laminate type photosensitive layer including the charge-generating layer and the charge-transporting layer, or may include a monolayer type photosensitive layer containing a charge-generating substance and a charge-transporting substance.

In the present disclosure, the outermost surface layer of the electrophotographic photosensitive member is defined as the surface layer.

As a method of producing the electrophotographic photosensitive member of the present disclosure, there is given a method involving preparing coating liquids for respective layers, sequentially applying coating liquids for desired layers, and drying the coating liquids. In this case, as a method of applying the coating liquids, there are given, for example, dip coating, spray coating, inkjet coating, roll coating, die coating, blade coating, curtain coating, wire bar coating, and ring coating. Of those, dip coating is preferred from the viewpoints of efficiency and productivity.

The support and the respective layers are described below.

### <Support>

The support of the electrophotographic photosensitive member is preferably a support having electroconductivity (electroconductive support). In addition, examples of the shape of the support include a cylindrical shape, a belt shape, and a sheet shape. Of those, a cylindrical support is preferred. In addition, the surface of the support may be subjected to, for example, electrochemical treatment such as anodization, blast treatment, or cutting treatment.

A metal, a resin, glass, or the like is preferred as a material for the support.

Examples of the metal include aluminum, iron, nickel, copper, gold, stainless steel, and alloys thereof. Of those, an aluminum-made support using aluminum is preferred.

In addition, electroconductivity is preferably imparted to the resin or the glass through treatment involving, for example, mixing or coating the resin or the glass with an electroconductive material.

### <Electroconductive Layer>

An electroconductive layer may be arranged on the support. The arrangement of the electroconductive layer can conceal flaws and unevenness in the surface of the support, and control the reflection of light on the surface of the support.

The electroconductive layer preferably contains electroconductive particles and a binder resin.

A material for the electroconductive particles is, for example, a metal oxide, a metal, or carbon black.

Examples of the metal oxide include zinc oxide, aluminum oxide, indium oxide, silicon oxide, zirconium oxide, tin oxide, titanium oxide, strontium titanate, magnesium oxide, antimony oxide, and bismuth oxide. Examples of the metal include aluminum, nickel, iron, nichrome, copper, zinc, and silver.

Of those, metal oxide particles are preferably used as the electroconductive particles, and in particular, titanium oxide particles, tin oxide particles, and zinc oxide particles are more preferably used.

When the metal oxide particles are used as the electroconductive particles, the surface of each of the metal oxide particles may be treated with a silane coupling agent or the like, or the metal oxide particles may each be doped with an element, such as phosphorus or aluminum, or an oxide thereof.

In addition, the electroconductive particles may each have a laminated configuration including a core particle and a coating layer coating the particle. Examples of the core particle include titanium oxide particles, barium sulfate particles, and zinc oxide particles. A material for the coating layer is, for example, metal oxide particles such as tin oxide.

In addition, when the metal oxide particles are used as the electroconductive particles, their volume-average particle diameter is preferably 1 nm or more and 500 nm or less, more preferably 3 nm or more and 400 nm or less.

Examples of the binder resin include a polyester resin, a polycarbonate resin, a polyvinyl acetal resin, an acrylic resin, a silicone resin, an epoxy resin, a melamine resin, a polyurethane resin, a phenol resin, and an alkyd resin.

In addition, the electroconductive layer may further contain, for example, a silicone oil, resin particles, or a concealing agent such as titanium oxide.

The electroconductive layer may be formed by preparing a coating liquid for an electroconductive layer containing the above-mentioned materials and a solvent, forming a coating film thereof on the support, and drying the coating film. Examples of the solvent to be used for the coating liquid for an electroconductive layer include an alcohol-based solvent, a sulfoxide-based solvent, a ketone-based solvent, an ether-based solvent, an ester-based solvent, and an aromatic hydrocarbon-based solvent. A dispersion method for dispersing the electroconductive particles in the coating liquid for an electroconductive layer is, for example, a method involving using a paint shaker, a sand mill, a ball mill, or a liquid collision type high-speed disperser.

The average thickness of the electroconductive layer is preferably 1 µm or more and 50 µm or less, particularly preferably 3 µm or more and 40 µm or less.

### <Undercoat Layer>

In the present disclosure, the undercoat layer may be arranged on the support or the electroconductive layer. The arrangement of the undercoat layer can improve an adhesive function between layers to impart a charge injection-inhibiting function.

The undercoat layer preferably contains a binder resin. In addition, the undercoat layer may be formed as a cured film by polymerizing a composition containing a monomer having a polymerizable functional group.

Examples of the binder resin include a polyester resin, a polycarbonate resin, a polyvinyl acetal resin, an acrylic resin, an epoxy resin, a melamine resin, a polyurethane resin, a phenol resin, a polyvinyl phenol resin, an alkyd resin, a polyvinyl alcohol resin, a polyethylene oxide resin, a polypropylene oxide resin, a polyamide resin, a polyamic acid resin, a polyimide resin, a polyamide imide resin, and a cellulose resin.

Examples of the polymerizable functional group of the monomer having a polymerizable functional group include an isocyanate group, a blocked isocyanate group, a methylol group, an alkylated methylol group, an epoxy group, a metal alkoxide group, a hydroxy group, an amino group, a carboxy group, a thiol group, a carboxylic acid anhydride group, and a carbon-carbon double bond group.

In addition, the undercoat layer may further contain an electron-transporting substance, metal oxide particles, metal particles, an electroconductive polymer, and the like for the purpose of improving electric characteristics. Of those, an electron-transporting substance and metal oxide particles are preferably used.

Examples of the electron-transporting substance include a quinone compound, an imide compound, a benzimidazole compound, a cyclopentadienylidene compound, a fluorenone compound, a xanthone compound, a benzophenone compound, a cyanovinyl compound, a halogenated aryl compound, a silole compound, and a boron-containing compound. An electron-transporting substance having a polymerizable functional group may be used as the electron-transporting substance and copolymerized with the above-mentioned monomer having a polymerizable functional group to form the undercoat layer as a cured film.

Examples of the metal oxide particles include particles of indium tin oxide, tin oxide, indium oxide, titanium oxide, strontium titanate, zinc oxide, and aluminum oxide. Particles of silicon dioxide may also be used. Examples of the metal particles include particles of gold, silver, and aluminum.

The metal oxide particles to be incorporated into the undercoat layer may be subjected to surface treatment with a surface treatment agent such as a silane coupling agent before use.

A general method is used as a method of subj ecting the metal oxide particles to the surface treatment. Examples thereof include a dry method and a wet method.

The dry method involves, while stirring the metal oxide particles in a mixer capable of high-speed stirring such as a Henschel mixer, adding an alcoholic aqueous solution, organic solvent solution, or aqueous solution containing the surface treatment agent, uniformly dispersing the mixture, and then drying the dispersion.

In addition, the wet method involves stirring the metal oxide particles and the surface treatment agent in a solvent, or dispersing the metal oxide particles and the surface treatment agent in a solvent with a sand mill or the like using glass beads or the like. After the dispersion, the solvent is removed by filtration or evaporation under reduced pressure. After the removal of the solvent, it is preferred to further perform baking at 100°C or more.

The undercoat layer may further contain an additive, and for example, may contain a known material, such as: metal particles such as aluminum particles; electroconductive substance particles such as carbon black; a charge-transporting substance; a metal chelate compound; or an organometallic compound.

The undercoat layer may be formed by preparing a coating liquid for an undercoat layer containing the above-mentioned materials and a solvent, forming a coating film thereof on the support or the electroconductive layer, and drying and/or curing the coating film.

Examples of the solvent to be used for the coating liquid for an undercoat layer include organic solvents, such as an alcohol, a sulfoxide, a ketone, an ether, an ester, an aliphatic halogenated hydrocarbon, and an aromatic compound. In the present disclosure, alcohol-based and ketone-based solvents are preferably used.

A dispersion method for preparing the coating liquid for an undercoat layer is, for example, a method involving using a homogenizer, an ultrasonic disperser, a ball mill, a sand mill, a roll mill, a vibration mill, an attritor, or a liquid collision type high-speed disperser.

The average thickness of the undercoat layer is preferably 0.1 µm or more and 50 µm or less, more preferably 0.2 µm or more and 40 µm or less, particularly preferably 0.3 µm or more and 30 µm or less.

### <Photosensitive Layer>

The photosensitive layers of the electrophotographic photosensitive member are mainly classified into (1) a laminate type photosensitive layer and (2) a monolayer type photosensitive layer. (1) The laminate type photosensitive layer is a photosensitive layer having a charge-generating layer containing a charge-generating substance and a charge-transporting layer containing a charge-transporting substance. (2) The monolayer type photosensitive layer is a photosensitive layer containing both a charge-generating substance and a charge-transporting substance.

### (1) Laminate Type Photosensitive Layer

The laminate type photosensitive layer has the charge-generating layer and the charge-transporting layer.

### (1-1) Charge-generating Layer

The charge-generating layer preferably contains the charge-generating substance and a binder resin.

Examples of the charge-generating substance include azo pigments, perylene pigments, polycyclic quinone pigments, indigo pigments, and phthalocyanine pigments. Of those, azo pigments and phthalocyanine pigments are preferred. Of the phthalocyanine pigments, an oxytitanium phthalocyanine pigment, a chlorogallium phthalocyanine pigment, and a hydroxygallium phthalocyanine pigment are preferred.

The content of the charge-generating substance in the charge-generating layer is preferably 40 mass% or more and 85 mass% or less, more preferably 60 mass% or more and 80 mass% or less with respect to the total mass of the charge-generating layer.

Examples of the binder resin include a polyester resin, a polycarbonate resin, a polyvinyl acetal resin, a polyvinyl butyral resin, an acrylic resin, a silicone resin, an epoxy resin, a melamine resin, a polyurethane resin, a phenol resin, a polyvinyl alcohol resin, a cellulose resin, a polystyrene resin, a polyvinyl acetate resin, and a polyvinyl chloride resin. Of those, a polyvinyl butyral resin is more preferred.

In addition, the charge-generating layer may further contain an additive, such as an antioxidant or a UV absorber. Specific examples thereof include a hindered phenol compound, a hindered amine compound, a sulfur compound, a phosphorus compound, and a benzophenone compound.

The charge-generating layer may be formed by preparing a coating liquid for a charge-generating layer containing the above-mentioned materials and a solvent, forming a coating film thereof on the undercoat layer, and drying the coating film. Examples of the solvent to be used for the coating liquid include an alcohol-based solvent, a sulfoxide-based solvent, a ketone-based solvent, an ether-based solvent, an ester-based solvent, and an aromatic hydrocarbon-based solvent.

The average thickness of the charge-generating layer is preferably 0.1 µm or more and 1 µm or less, more preferably 0.15 µm or more and 0.4 µm or less.

### (1-2) Charge-transporting Layer

The charge-transporting layer preferably contains the charge-transporting substance and a binder resin.

Examples of the charge-transporting substance include a polycyclic aromatic compound, a heterocyclic compound, a hydrazone compound, a styryl compound, an enamine compound, a triarylamine compound, and a resin having a group derived from each of these substances. Of those, a triarylamine compound is preferred.

The content of the charge-transporting substance in the charge-transporting layer is preferably 25 mass% or more and 70 mass% or less, more preferably 30 mass% or more and 55 mass% or less with respect to the total mass of the charge-transporting layer.

Examples of the binder resin include a polycarbonate resin, a polyarylate resin, an acrylic resin, and a polystyrene resin. Of those, a thermoplastic resin is preferred, and a polycarbonate resin and a polyarylate resin are particularly preferred.

A content ratio (mass ratio) between the charge-transporting substance and the binder resin is preferably from 4: 10 to 20: 10, more preferably from 5: 10 to 12: 10.

In addition, the charge-transporting layer may contain an additive, such as an antioxidant, a UV absorber, a plasticizer, a leveling agent, or a lubricant. Specific examples thereof include a hindered phenol compound, a hindered amine compound, a sulfur compound, a phosphorus compound, a benzophenone compound, a siloxane-modified resin, a silicone oil, polystyrene resin particles, polyethylene resin particles, boron nitride particles, and fluororesin particles.

The charge-transporting layer may be formed by preparing a coating liquid for a charge-transporting layer containing the above-mentioned materials and a solvent, forming a coating film thereof on the charge-generating layer, and drying the coating film. Examples of the solvent to be used for the coating liquid include an alcohol-based solvent, a ketone-based solvent, an ether-based solvent, an ester-based solvent, and an aromatic hydrocarbon-based solvent. Of those solvents, an ether-based solvent or an aromatic hydrocarbon-based solvent is preferred.

The average thickness of the charge-transporting layer is preferably 5 µm or more and 50 µm or less, particularly preferably 35 µm or more and 50 µm or less.

### (2) Monolayer Type Photosensitive Layer

The monolayer type photosensitive layer may be formed by preparing a coating liquid for a photosensitive layer containing the charge-generating substance, the charge-transporting substance, a binder resin, and a solvent, forming a coating film thereof on the undercoat layer, and drying the coating film. Examples of the charge-generating substance, the charge-transporting substance, and the binder resin are the same as those of the materials in the section "(1) Laminate Type Photosensitive Layer."

The average thickness of the monolayer type photosensitive layer is preferably 5 µm or more and 50 µm or less, particularly preferably 35 µm or more and 50 µm or less.

### <Surface Layer>

In the present disclosure, the layer present at the outermost surface of the electrophotographic photosensitive member is defined as the surface layer.

In the case of an electrophotographic photosensitive member including the above-mentioned laminate type photosensitive layer, the charge-transporting layer is the surface layer. In addition, in the case of an electrophotographic photosensitive member including the above-mentioned monolayer type photosensitive layer, the photosensitive layer is the surface layer. The average thickness of the surface layer is preferably 5 µm or more and 50 µm or less, particularly preferably 35 µm or more and 50 µm or less.

The surface layer of the present disclosure contains at least the binder resin having a unit structure represented by the following formula (A) or (B) and the organic resin particles each subjected to surface treatment with the compound represented by the following formula (C) or (D).

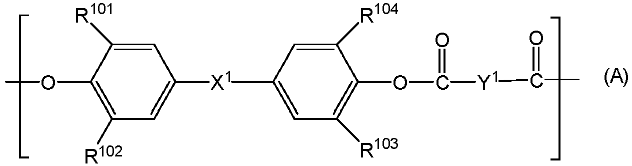

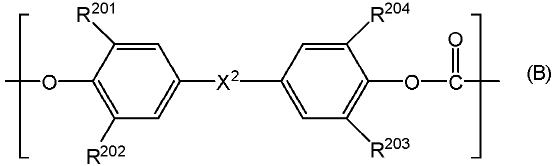

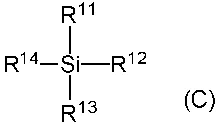

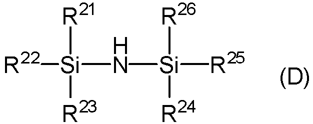

In the formula (A), R¹⁰¹ to R¹⁰⁴ each independently represent a hydrogen atom or a methyl group, X¹ represents a methylene group that may have an alkyl group or a phenyl group as a substituent, a cyclohexylidene group, an oxygen atom, or a single bond, and Y¹ represents a m-phenylene group, a p-phenylene group, or a divalent group obtained by bonding two p-phenylene groups through an oxygen atom.

In the formula (B), R²⁰¹ to R²⁰⁴ each independently represent a hydrogen atom or a methyl group, and X² represents a methylene group that may have an alkyl group or a phenyl group as a substituent, a cyclohexylidene group, an oxygen atom, or a single bond.

In the formula (C), R¹¹ to R¹⁴ each independently represent an alkyl group, a phenyl group, an alkoxy group, or a halogen atom, provided that at least one of R¹¹ to R¹⁴ represents an alkoxy group or a halogen atom.

In the formula (D), R²¹ to R²⁶ each independently represent an alkyl group or a phenyl group.

The present disclosure is described in detail below by way of exemplary embodiments of the surface layer.

### <Binder Resin>

The surface layer of the electrophotographic photosensitive member of the present disclosure contains the binder resin having a unit structure represented by the formula (A) or (B). Examples of the binder resin having each of those structures include a polycarbonate resin and a polyarylate resin. A binder resin having a structural unit represented by the following formula (F) or (G) is particularly preferred from the viewpoint of sufficiently exhibiting the effect of the present disclosure.

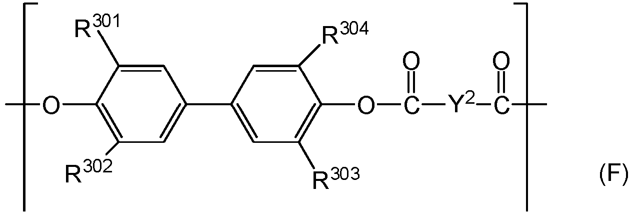

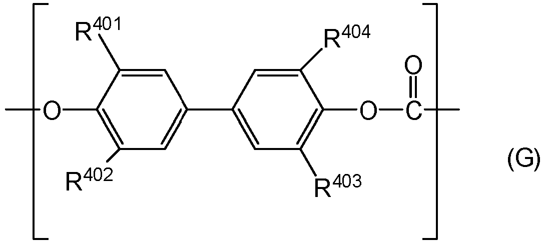

In the formula (F), R³⁰¹ to R³⁰⁴ each independently represent a hydrogen atom or a methyl group, and Y² represents a m-phenylene group, a p-phenylene group, or a divalent group obtained by bonding two p-phenylene groups through an oxygen atom.

In the formula (G), R⁴⁰¹ to R⁴⁰⁴ each independently represent a hydrogen atom or a methyl group.

Examples of the structural unit represented by the formula (A) include the following structures.

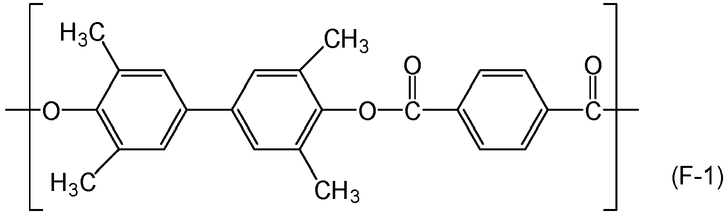

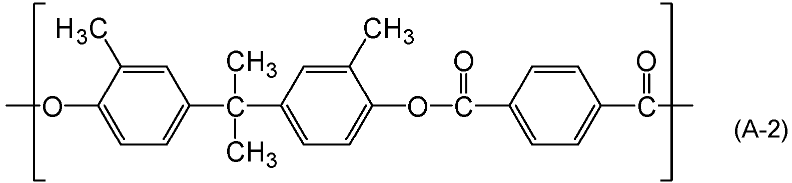

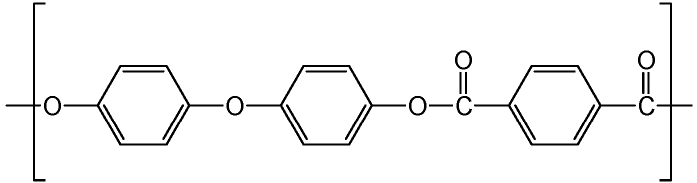

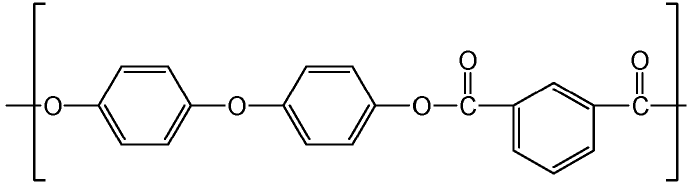

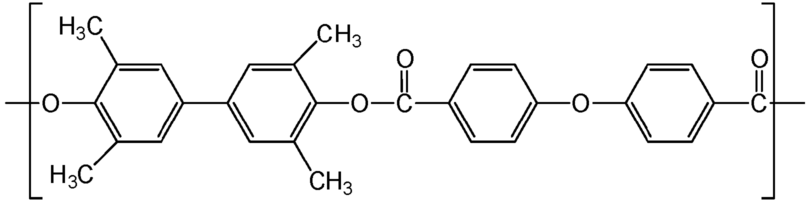

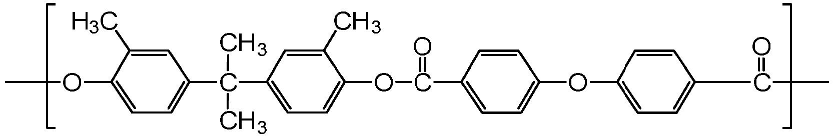

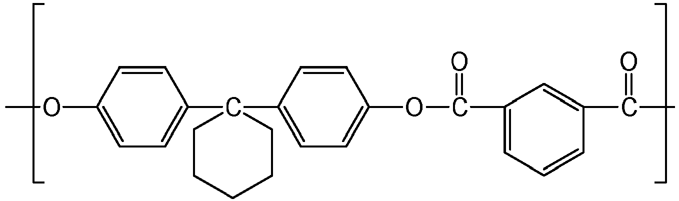

Examples of the structural unit represented by the formula (B) include the following structures.

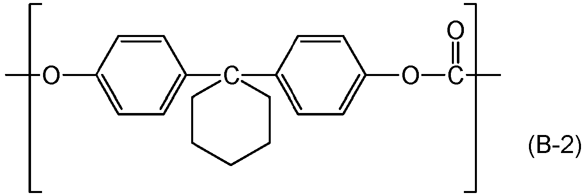

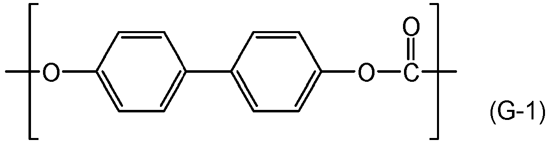

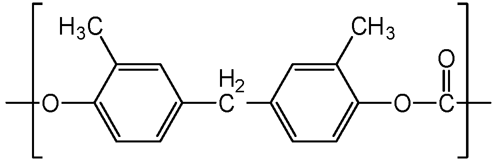

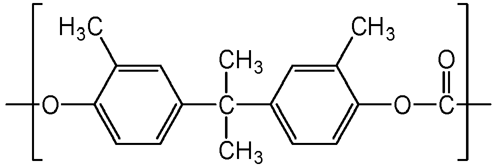

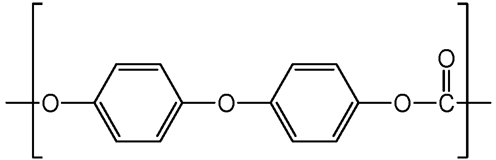

In the present disclosure, the content of the binder resin in the surface layer is preferably 23 mass% or more and 99 mass% or less, particularly preferably 40 mass% or more and 70 mass% or less with respect to the total mass of the surface layer from the viewpoint of sufficiently exhibiting the effect of the present disclosure.

### <Organic Resin Particles>

The surface layer of the electrophotographic photosensitive member of the present disclosure contains the organic resin particles.

The organic resin particles are each subjected to surface treatment with the compound represented by the formula (C) or (D).

Examples of the compound represented by the formula (C) include methyltrimethoxysilane, dimethyldimethoxysilane, propyltrimethoxysilane, hexyltrimethoxysilane, decyltrimethoxysilane, dodecyltrimethoxysilane, phenyltrimethoxysilane, methyltrichlorosilane, and hexyltrichlorosilane.

In addition, examples of the compound represented by the formula (D) include hexamethyldisilazane, 1,3-di-n-octyltetramethyldisilazane, 1,3-diphenyltetramethyldisilazane, and 1,3-dimethyl-1,1,3,3-tetraphenyldisilazane.

Examples of the resin to be incorporated into the organic resin particles to be used in the present disclosure include an acrylic resin, a styrene-acrylic resin, a silicone resin, a melamine resin, and a guanamine resin. In addition, particles containing a plurality of kinds of the above-mentioned resins are also preferably used. Of those, a resin having a unit structure represented by the following formula (E) is more preferred from the viewpoint of sufficiently exhibiting the effect of the present disclosure.

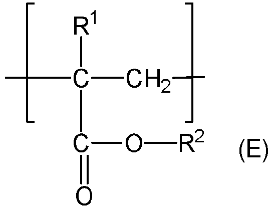

In the formula (E), R¹ represents a hydrogen atom or a methyl group, and R² represents an alkyl group that may have a substituent.

In the present disclosure, the content of the organic resin particles in the surface layer is preferably 1 mass% or more with respect to the total mass of the surface layer from the viewpoints of improvements in cleaning property and durability of the surface layer. In addition, the content is preferably 30 mass% or less with respect to the total mass of the surface layer from the viewpoints of suppressing residual potential and suppressing a crack. That is, the content of the organic resin particles in the surface layer is preferably 1 mass% or more and 30 mass% or less with respect to the total mass of the surface layer.

The organic resin particles to be used in the present disclosure are each subjected to surface treatment with the compound represented by the formula (C) or (D). Of the compounds each represented by the formula (C), a compound having an alkyl group having 6 or more and 12 or less carbon atoms is particularly preferably used from the viewpoint of suppressing residual potential and occurrence of a crack.

In an element ratio of the surface layer, the content of silicon derived from the compound to be used for the surface treatment is preferably 0.003 atomic% or more with respect to the total number of atoms in the surface layer excluding hydrogen atoms from the viewpoints of suppressing residual potential and suppressing occurrence of a crack. In addition, the content is preferably 0.3 atomic% or less with respect to the total number of atoms in the surface layer excluding hydrogen atoms from the viewpoint of suppressing residual potential. That is, the content of silicon atoms each derived from the compound represented by the formula (C) or (D) in the surface layer is preferably 0.003 atomic% or more and 0.3 atomic% or less with respect to the total number of atoms (excluding hydrogen atoms) in the surface layer.

### (Method of measuring Silicon Content)

In the elemental analysis of the surface layer, measurement is performed as described below using X-ray photoelectron spectroscopy (XPS). As a measurement sample, a piece of the surface layer cut out to dimensions of 10 mm square is set on an XPS dedicated platen. In addition, a site to be irradiated with an X-ray and a site to be sputtered by gas cluster ion beam (GCIB) irradiation are set in the above-mentioned sample portion with the following XPS apparatus.
Apparatus used: PHI5000 VersaProbeII manufactured by ULVAC-PHI, Inc.
Applied radiation: Al-Kα ray
Beam diameter: 100 µm
Output: 25 W, 15 kV
Photoelectron acceptance angle: 45°
Pass Energy: 58.70 eV
Step Size: 0.125 eV
XPS peak: Si2p, N1s, C1s, O1s
Measurement range: 300 µm×200 µm

A value measured under the above-mentioned conditions was defined as Si1 (atomic%).

Further, sputtering was performed from the outermost surface of the surface layer to a position having a depth of 40 nm under the following sputtering conditions, and a value measured under the above-mentioned measurement conditions was defined as Si2 (atomic%).
GUN type: gas cluster ion beam (GCIB)
Sputter setting: 10 kV

With regard to the position having a depth of 40 nm, a sputtering time corresponding to 40 nm was calculated by measuring a sputtering rate (rate of depth to time) in advance, and it was regarded that sputtering was performed to the position having a depth of 40 nm by performing sputtering for the calculated time period.

In the observation of a section of the surface layer, the arithmetic average of the long diameters of primary particles (average primary particle diameter) measured from a secondary electron image of the organic resin particles obtained with a scanning electron microscope is preferably 10 nm or more and 300 nm or less from the viewpoints of improving dispersibility of the particles and suppressing residual potential.

The average primary particle diameter of the organic resin particles can be measured and calculated by the following method.

### (Method of measuring Average Primary Particle Diameter)

The average particle diameter of the organic resin particles is measured with a field emission scanning electron microscope (FE-SEM) as described below. The organic resin particles were caused to adhere to a commercial carbon electroconductive tape, and the organic resin particles that did not adhere to the electroconductive tape were removed with compressed air, followed by the deposition of platinum from the vapor onto the remaining particles. The organic resin particles having deposited thereonto platinum were observed with a FE-SEM manufactured by Hitachi High-Technologies Corporation (S-4700). Conditions for the measurement with the FE-SEM are as described below.

| | |
|---|---|
| Acceleration voltage: | 2 kV |
| WD: | 5 mm |
| Magnification: | 20,000 |
| Number of pixels: | 1,280 pixels in a longitudinal direction and 960 pixels in a lateral direction (size per pixel: 5 nm) |

The Feret diameters of 100 particles were determined from the resultant image with ImageJ (open source software manufactured by the National Institutes of Health (NIH)), and their average was calculated and used as the average particle diameter.

The organic resin particles of the present disclosure may be used alone or in combination thereof.

### <Charge-transporting Substance>

The surface layer of the electrophotographic photosensitive member of the present disclosure may contain a charge-transporting substance.

Examples of the charge-transporting substance include a polycyclic aromatic compound, a heterocyclic compound, a hydrazone compound, a styryl compound, an enamine compound, a triarylamine compound, and a resin having a group derived from each of those substances. Of those, a triarylamine compound is preferred. The charge-transporting substances may be used alone or in combination thereof.

### <Process Cartridge and Electrophotographic Apparatus>

The electrophotographic photosensitive member of the present disclosure may be one constituent for a process cartridge or an electrophotographic apparatus. The process cartridge has features of integrally supporting the electrophotographic photosensitive member described in the foregoing, and at least one unit selected from the group consisting of: a charging unit; a developing unit; a transfer unit; and a cleaning unit, and being detachably attachable to the main body of an electrophotographic apparatus. In addition, the electrophotographic apparatus has a feature of including: the electrophotographic photosensitive member described in the foregoing; a charging unit; an exposing unit; a developing unit; and a transfer unit.

An example of the schematic configuration of an electrophotographic apparatus including a process cartridge including the electrophotographic photosensitive member is illustrated in FIG. 2.

An electrophotographic photosensitive member 1 of a cylindrical shape (drum shape) is rotationally driven about a shaft 2 in a direction indicated by the arrow at a predetermined peripheral speed (process speed). The surface of the electrophotographic photosensitive member 1 is charged to a predetermined positive or negative potential by a charging unit 3 in the rotational process. In FIG. 2, a roller charging system based on a roller-type charging member is illustrated, but a charging system, such as a corona charging system, a proximity charging system, or an injection charging system, may be adopted. The charged surface of the electrophotographic photosensitive member 1 is irradiated with exposure light 4 from an exposing unit (not shown), and hence an electrostatic latent image corresponding to target image information is formed thereon. The exposure light 4 is light whose intensity has been modulated in correspondence with a time-series electric digital image signal of the target image information, and is emitted, for example, from an image exposing unit, such as slit exposure or laser beam scanning exposure. The electrostatic latent image formed on the surface of the electrophotographic photosensitive member 1 is developed (normal development or reversal development) with toner stored in a developing unit 5 to form a toner image on the surface of the electrophotographic photosensitive member 1. The toner image formed on the surface of the electrophotographic photosensitive member 1 is transferred by a transfer unit 6 onto a transfer material 7. At this time, a bias voltage opposite in polarity to charge that the toner possesses is applied from a bias power source (not shown) to the transfer unit 6. In addition, when the transfer material 7 is paper, the transfer material 7 is taken out of a sheet feeding portion (not shown) and fed to a space between the electrophotographic photosensitive member 1 and the transfer unit 6 in synchronization with the rotation of the electrophotographic photosensitive member 1. The transfer material 7 onto which the toner image has been transferred from the electrophotographic photosensitive member 1 is separated from the surface of the electrophotographic photosensitive member 1, is conveyed to a fixing unit 8, and is subjected to treatment for fixing the toner image to be printed out as an image-formed product (a print or a copy) to the outside of the electrophotographic apparatus. The electrophotographic apparatus may include a cleaning unit 9 for removing a deposit such as the toner remaining on the surface of the electrophotographic photosensitive member 1 after the transfer. In addition, a so-called cleaner-less system that removes the deposit with the developing unit or the like without separate arrangement of the cleaning unit may be used. In the present disclosure, a plurality of constituents selected from the electrophotographic photosensitive member 1, the charging unit 3, the developing unit 5, the cleaning unit 9, and the like may be stored in a container and integrally supported to form a process cartridge. In addition, the process cartridge may be detachably attachable to the main body of the electrophotographic apparatus. For example, such a configuration as described below is adopted. At least one selected from the charging unit 3, the developing unit 5, and the cleaning unit 9 is integrally supported with the electrophotographic photosensitive member 1 to form a cartridge. The cartridge may be used as a process cartridge 11 to be detachably attachable onto the main body of the electrophotographic apparatus with a guiding unit 12 such as a rail of the main body of the electrophotographic apparatus. The electrophotographic apparatus may include an electricity-removing mechanism for subjecting the surface of the electrophotographic photosensitive member 1 to electricity-removing treatment with pre-exposure light 10 from a pre-exposing unit (not shown). In addition, the guiding unit 12 such as the rail may be arranged for detachably attaching the process cartridge 11 of the present disclosure onto the main body of the electrophotographic apparatus. The electrophotographic apparatus of the present disclosure is characterized by including at least one unit selected from the group consisting of: the electrophotographic photosensitive member 1; the charging unit 3; the exposing unit; the developing unit 5; and the transfer unit 6.

The electrophotographic photosensitive member of the present disclosure may be used in, for example, a laser beam printer, an LED printer, a copying machine, a facsimile, and a multifunction machine thereof.

### [Examples]

The present disclosure is described in more detail below by way of Examples and Comparative Examples, but is not limited thereto. In the description of Examples below, the term "part(s)" means "part(s) by mass" unless otherwise stated.

### <Surface Treatment of Organic Resin Particles>

The organic resin particles were each subjected to surface treatment with the compound represented by the formula (C) or (D) by the following method.

### (Particles A1)

5 Parts of polymethyl methacrylate particles having an average primary particle diameter of 150 nm, 15 parts of pure water, 15 parts of hexane, and 10 parts of methanol were added to a glass-made flask including a stirring machine, a thermostat, and a temperature gauge, and a temperature was increased to 50°C while the mixture was stirred. After that, 1 part of dodecyltrimethoxysilane was added thereto, and the mixture was stirred for 4 hours while being kept at 50°C. After that, the mixed liquid was subjected to a centrifuge, and the separated precipitate was washed with ethanol, and was dried at a temperature of 50°C under a decompressed state of 1,000 Pa or less for 4 hours to provide surface-treated organic resin particles A1.

### (Particles A2 to A16 and C1 to C5)

Particles A2 to A16 and C1 to C5 were provided in the same manner as the particles A1 except that, in the treatment of the particles A1, the surface treatment agent, the kind of particles, the stirring time, and the particle diameter were appropriately changed as shown in Table 1.

### (Particles B1)

5 Parts of polymethyl methacrylate particles having an average primary particle diameter of 150 nm and 50 parts of hexane were added to a glass-made flask including a stirring machine, a thermostat, and a temperature gauge, and a temperature was increased to 50°C while the mixture was stirred. After that, 1 part of hexamethyldisilazane was added thereto, and the mixture was stirred for 4 hours while being kept at 50°C. After that, the mixed liquid was subjected to a centrifuge, and the separated precipitate was washed with ethanol, and was dried at a temperature of 50°C under a decompressed state of 1,000 Pa or less for 4 hours to provide surface-treated organic resin particles B1.

### (Particles B2 to B9, D1, and D2)

Particles B2 to B9, D1, and D2 were provided in the same manner as the particles B1 except that, in the treatment of the particles B1, the kind of particles, the stirring time, and the particle diameter were appropriately changed as shown in Table 1.

**Table 1**

| Name | Surface treatment agent | Kind of particles | Stirring time [hr] | Particle diameter [nm] |
|---|---|---|---|---|
| A1 | Dodecyltrimethoxysilane | Polymethyl methacrylate | 4 | 150 |
| A2 | Decyltrimethoxysilane | Polymethyl methacrylate | 4 | 150 |
| A3 | Hexyltrimethoxysilane | Polymethyl methacrylate | 4 | 150 |
| A4 | Propyltrimethoxysilane | Polymethyl methacrylate | 4 | 150 |
| A5 | Phenyltrimethoxysilane | Polymethyl methacrylate | 4 | 150 |
| A6 | Methyltrimethoxysilane | Polymethyl methacrylate | 4 | 150 |
| A7 | Dodecyltrimethoxysilane | Styreneacrylic | 4 | 150 |
| A8 | Dodecyltrimethoxysilane | Melamine | 4 | 150 |
| A9 | Dodecyltrimethoxysilane | Polymethyl methacrylate | 0.2 | 150 |
| A10 | Dodecyltrimethoxysilane | Polymethyl methacrylate | 0.5 | 150 |
| A11 | Dodecyltrimethoxysilane | Polymethyl methacrylate | 1 | 150 |
| A12 | Dodecyltrimethoxysilane | Polymethyl methacrylate | 8 | 150 |
| A13 | Dodecyltrimethoxysilane | Polymethyl methacrylate | 12 | 150 |
| A14 | Dodecyltrimethoxysilane | Polymethyl methacrylate | 4 | 100 |
| A15 | Dodecyltrimethoxysilane | Polymethyl methacrylate | 4 | 300 |
| A16 | Dodecyltrimethoxysilane | Polymethyl methacrylate | 4 | 320 |
| B1 | Hexamethyldisilazane | Polymethyl methacrylate | 4 | 150 |
| B2 | Hexamethyldisilazane | Styreneacrylic | 4 | 150 |
| B3 | Hexamethyldisilazane | Melamine | 4 | 150 |
| B4 | Hexamethyldisilazane | Polymethyl methacrylate | 0.2 | 150 |
| B5 | Hexamethyldisilazane | Polymethyl methacrylate | 0.5 | 150 |
| B6 | Hexamethyldisilazane | Polymethyl methacrylate | 8 | 150 |
| B7 | Hexamethyldisilazane | Polymethyl methacrylate | 12 | 150 |
| B8 | Hexamethyldisilazane | Polymethyl methacrylate | 4 | 300 |
| B9 | Hexamethyldisilazane | Polymethyl methacrylate | 4 | 320 |
| C1 | Dodecyltrimethoxysilane | Silica | 4 | 150 |
| C2 | Dodecyltrimethoxysilane | Alumina | 4 | 150 |
| C3 | None | Polymethyl methacrylate | 4 | 150 |
| C4 | None | Styreneacrylic | 4 | 150 |
| C5 | None | Melamine | 4 | 150 |
| D1 | Hexamethyldisilazane | Silica | 4 | 150 |
| D2 | Hexamethyldisilazane | Alumina | 4 | 150 |

### [Example 1]

### <Production of Electrophotographic Photosensitive Member>

### (Support)

A product obtained by cutting a cylindrical aluminum cylinder (JIS-A3003, aluminum alloy, outer diameter: 30 mm, length: 357.5 mm, wall thickness: 0.7 mm) was used as a support (electroconductive support). The support was subjected to ultrasonic cleaning in a cleaning liquid obtained by incorporating a detergent (product name: CHEMICOL CT, manufactured by Tokiwa Chemical Industries Co., Ltd.) into pure water, and subsequently, the cleaning liquid was washed off. After that, the cleaned product was further subjected to ultrasonic cleaning in pure water to be subjected to degreasing treatment. The resultant was used as a support.

### (Undercoat Layer)

60 Parts of zinc oxide particles (average particle diameter: 70 nm, specific surface area: 15 m²/g) were stirred and mixed with 500 parts of tetrahydrofuran, and 0.75 part of a silane coupling agent (compound name: N-2-(aminoethyl)-3-aminopropyltrimethoxysilane, product name: KBM-603, manufactured by Shin-Etsu Chemical Co., Ltd.) was added to the mixture, followed by stirring for 2 hours. After that, tetrahydrofuran was evaporated under reduced pressure, and the residue was heated and dried at 120°C for 3 hours to provide surface-treated zinc oxide particles.

Subsequently, 25 parts of a butyral resin (product name: BM-1, manufactured by Sekisui Chemical Company, Limited) serving as a polyol and 22.5 parts of a blocked isocyanate (product name: SUMIDUR BL-3173, manufactured by Sumitomo Bayer Urethane Co., Ltd.) were dissolved in 142 parts of methyl ethyl ketone. 100 Parts of the surface-treated zinc oxide particles and 1 part of anthraquinone were added to the solution, and the materials were dispersed with a sand mill using glass beads each having a diameter of 1 mm for 5 hours.

After the dispersion treatment, 0.008 part of dioctyltin dilaurate and 6.5 parts of silicone resin particles (TOSPEARL 145, manufactured by GE Toshiba Silicone Co., Ltd.) were added to the resultant, and the mixture was stirred to prepare a coating liquid for an undercoat layer.

The resultant coating liquid for an undercoat layer was applied onto the above-mentioned support by dip coating to form a coating film, and the coating film was dried at 190°C for 24 minutes to form an undercoat layer having a thickness of 20 µm.

### (Charge-generating Layer)

Next, 15 parts of a chlorogallium phthalocyanine crystal having strong diffraction peaks at Bragg angles (2θ±0.2°) of at least 7.4°, 16.6°, 25.5°, and 28.3° for a CuKα characteristic X-ray, 10 parts of a vinyl chloride-vinyl acetate copolymer resin (VMCH, manufactured by Union Carbide Japan K.K.), and 300 parts of n-butyl alcohol were mixed, and the mixture was subjected to dispersion treatment with a sand mill using glass beads each having a diameter of 1 mm for 4 hours to prepare a coating liquid for a charge-generating layer.

The coating liquid for a charge-generating layer was applied onto the undercoat layer by dip coating, and the resultant coating film was dried at 150°C for 5 minutes to form a charge-generating layer having a thickness of 0.2 µm.

### (Charge-transporting Layer)

Next, 20 parts of the particles A1 described above and 50 parts of tetrahydrofuran were stirred and mixed for 48 hours while the temperature of the mixed liquid was kept at 20°C. Thus, a prepared liquid A was obtained.

Next, 40 parts of N,N'-bis(3-methylphenyl)-N,N'-diphenylbenzidine, 20 parts of a compound represented by the following formula (CT-1), 70 parts of a resin having a repeating structure represented by the following formula (G-1) (viscosity-average molecular weight: 40,000), and 2.0 parts of 2,6-di-t-butyl-4-methylphenol serving as an antioxidant were mixed, and 250 parts of tetrahydrofuran was mixed and dissolved in the mixture to provide a prepared liquid B.

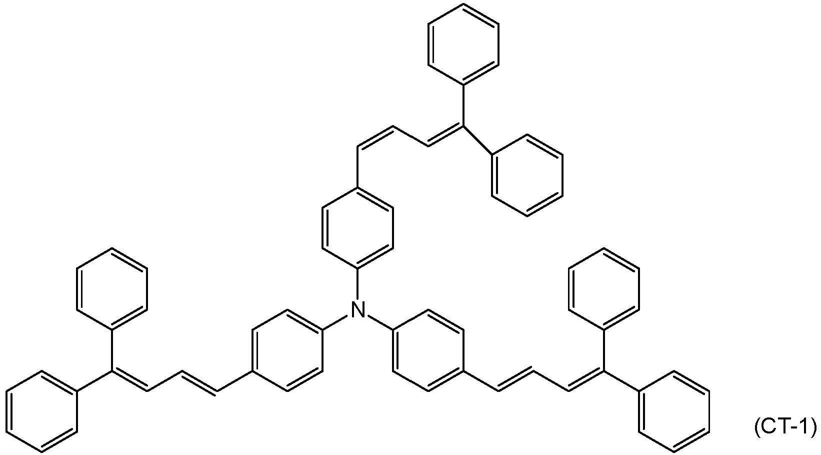

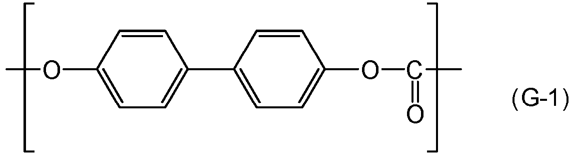

The prepared liquid A was added to the prepared liquid B, and the liquids were stirred and mixed. After that, the mixture was passed through a high-pressure dispersing machine (product name: MICROFLUIDIZER M-110EH, manufactured by Microfluidics, USA) to provide a dispersion liquid.

After that, the dispersion liquid was filtered with a polyflon filter (product name: PF-040, manufactured by Advantec Toyo Kaisha, Ltd.) to prepare a coating liquid for a charge-transporting layer.

The coating liquid for a charge-transporting layer was applied onto the charge-generating layer by dip coating to form a coating film, and the resultant coating film was dried at 150°C for 40 minutes to form a charge-transporting layer having a thickness of 40 µm.

Thus, an electrophotographic photosensitive member was produced.

### [Examples 2 to 34 and Comparative Examples 1 to 7]

Electrophotographic photosensitive members were each produced in the same manner as in Example 1 except that, in the formation of the charge-transporting layer, the kind of the particles, the addition amount of the particles, and the kind of the binder resin were changed as shown in Table 2.

Herein, the term "(F-1)" refers to a binder resin having a repeating structure represented by the formula (F) in which R³⁰¹ to R¹⁰⁴ each represent a methyl group, and Y² represents a p-phenylene group. In addition, the term "(A-2)" refers to a binder resin having a repeating structure represented by the formula (A) in which R¹⁰¹ and R¹⁰⁴ each represent a methyl group, R¹⁰² and R¹⁰³ each represent a hydrogen group, X¹ represents a dimethylmethylene group, and Y¹ represents a p-phenylene group. In addition, the term "(B-2)" refers to a binder resin having the following repeating structure.

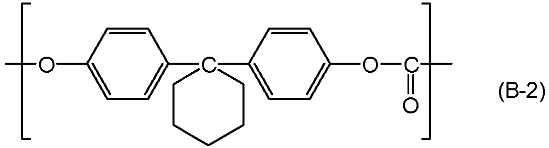

**Table 2**

| | Particles | Addition amount [part(s)] | Binder resin | Si1 [atomic%] | Si2 [atomic%] |
|---|---|---|---|---|---|
| Example 1 | A1 | 20 | G-1 | 0.135 | 0.139 |
| Example 2 | A1 | 5 | G-1 | 0.011 | 0.01 |
| Example 3 | A1 | 55 | G-1 | 0.289 | 0.29 |
| Example 4 | A1 | 20 | F-1 | 0.133 | 0.136 |
| Example 5 | A2 | 20 | G-1 | 0.142 | 0.141 |
| Example 6 | A3 | 20 | G-1 | 0.15 | 0.149 |
| Example 7 | A10 | 20 | G-1 | 0.005 | 0.005 |
| Example 8 | A11 | 20 | G-1 | 0.092 | 0.096 |
| Example 9 | A12 | 20 | G-1 | 0.287 | 0.285 |
| Example 10 | A14 | 20 | G-1 | 0.124 | 0.124 |
| Example 11 | A15 | 20 | G-1 | 0.151 | 0.153 |
| Example 12 | A1 | 20 | B-2 | 0.135 | 0.137 |
| Example 13 | A1 | 20 | A-2 | 0.136 | 0.135 |
| Example 14 | B1 | 20 | G-1 | 0.205 | 0.211 |
| Example 15 | B5 | 20 | G-1 | 0.081 | 0.078 |
| Example 16 | B6 | 20 | G-1 | 0.297 | 0.295 |
| Example 17 | B8 | 20 | G-1 | 0.207 | 0.21 |
| Example 18 | A4 | 20 | G-1 | 0.159 | 0.16 |
| Example 19 | A5 | 20 | G-1 | 0.144 | 0.147 |
| Example 20 | A6 | 20 | G-1 | 0.199 | 0.198 |
| Example 21 | A7 | 20 | G-1 | 0.087 | 0.086 |
| Example 22 | A8 | 20 | G-1 | 0.091 | 0.09 |
| Example 23 | A9 | 10 | G-1 | 0.0028 | 0.0028 |
| Example 24 | A13 | 40 | G-1 | 0.312 | 0.305 |
| Example 25 | A16 | 20 | G-1 | 0.154 | 0.153 |
| Example 26 | A1 | 1 | G-1 | 0.009 | 0.0089 |
| Example 27 | A1 | 60 | G-1 | 0.279 | 0.28 |
| Example 28 | B1 | 20 | B-2 | 0.203 | 0.202 |
| Example 29 | B1 | 20 | A-2 | 0.207 | 0.206 |
| Example 30 | B2 | 20 | G-1 | 0.111 | 0.121 |
| Example 31 | B3 | 20 | G-1 | 0.089 | 0.085 |
| Example 32 | B4 | 10 | G-1 | 0.0029 | 0.0027 |
| Example 33 | B7 | 40 | G-1 | 0.308 | 0.311 |
| Example 34 | B9 | 20 | G-1 | 0.21 | 0.211 |
| Comparative Example 1 | C1 | 20 | G-1 | 0.92 | 0.923 |
| Comparative Example 2 | C2 | 20 | G-1 | 0.7 | 0.699 |
| Comparative Example 3 | C3 | 20 | G-1 | 0 | 0 |
| Comparative Example 4 | C4 | 20 | G-1 | 0 | 0 |
| Comparative Example 5 | C5 | 20 | G-1 | 0 | 0 |
| Comparative Example 6 | D1 | 20 | G-1 | 1.18 | 1.2 |
| Comparative Example 7 | D2 | 20 | G-1 | 0.834 | 0.841 |

### <Evaluation of Electrophotographic Photosensitive Member>

The electrophotographic photosensitive members produced in Examples 1 to 34 and Comparative Examples 1 to 7 were evaluated as described below.

### [Evaluation Apparatus 1-1]

An evaluation was performed by mounting each of the electrophotographic photosensitive members produced in Examples 1 to 34 and Comparative Examples 1 to 7 on a copying machine imageRUNNER ADVANCE DX C3835F (product name) manufactured by Canon Inc.

Specifically, the above-mentioned evaluation apparatus was placed under an environment having a temperature of 23°C and a relative humidity of 50%RH, and each of the produced electrophotographic photosensitive members was mounted on its process cartridge for a magenta color. The resultant was mounted on the station of the process cartridge for a magenta color, and the evaluation was performed.

### [Evaluation Apparatus 1-2]

An evaluation was performed by mounting each of the electrophotographic photosensitive members produced in Examples 1 to 34 and Comparative Examples 1 to 7 on a reconstructed machine of a copying machine imageRUNNER ADVANCE DX C3835F (product name) manufactured by Canon Inc. Specifically, the above-mentioned evaluation apparatus was placed under an environment having a temperature of 23°C and a relative humidity of 50%RH, and each of the produced electrophotographic photosensitive members was mounted on its process cartridge for a magenta color. The resultant was mounted on the station of the process cartridge for a magenta color, and the evaluation was performed.

The surface potential of each of the electrophotographic photosensitive members was measured by removing a cartridge for development from the above-mentioned evaluation apparatus and inserting a potential-measuring device into the resultant space. The potential-measuring device is formed by arranging a potential-measuring probe (product name: model 6000B-8, manufactured by Trek Japan) at the development position of the cartridge for development. In addition, the position of the potential-measuring probe with respect to the electrophotographic photosensitive member was set as follows: the probe was placed at a center in the generating line direction of the electrophotographic photosensitive member while being distant from the surface of the electrophotographic photosensitive member with a gap of 3 mm. Further, a potential at the central portion of the electrophotographic photosensitive member was measured with a surface potentiometer (product name: model 344, manufactured by Trek Japan).

### (Evaluation of Crack)

The evaluations of cracks were performed by using the evaluation apparatus 1-1 described above.

The cartridge including each of the electrophotographic photosensitive members was mounted on the evaluation apparatus, and a monochromatic letter image having a print percentage of 1% was repeatedly formed on 100,000 sheets of A4 size plain paper. After that, the electrophotographic photosensitive member was removed, and 10 sample pieces each measuring 5 mm×5 mm were cut out at a position of about 180 mm from an upper end of the photosensitive member. The state of occurrence of a crack appearing on the surface of each of the sample pieces was observed with a FE-SEM manufactured by Hitachi High-Technologies Corporation (S-4700). Conditions for the measurement with the FE-SEM are as described below.

| | |
|---|---|
| Acceleration voltage: | 2 kV |
| WD: | 5 mm |
| Magnification: | 10,000 |
| Number of pixels: | 1,280 pixels in a longitudinal direction and 960 pixels in a lateral direction (size per pixel: 10 nm) |

Each of the 10 sample pieces was observed under those conditions, and evaluations of cracks were performed by calculating an average total length of cracks per one field of view from the average values of the number of cracks observed and the size thereof. The results are shown in Table 3.

### (Evaluation of Residual Potential)

The evaluations of residual potential were performed by measuring the residual potential of surfaces of the electrophotographic photosensitive members by using the evaluation apparatus 1-2 described above. A bias to be applied was set so that the dark portion potential of the non-exposed portion of the electrophotographic photosensitive member became -600 V, and the light quantity of laser light became 0.313 µJ/cm² . The exposure corresponding to A3 size was repeated on 5 sheets, and then a potential of the first cycle was measured immediately after electricity was removed by being subjected to pre-exposure, and the potential was defined as residual potential. The results are shown in Table 3.

### (Evaluation of Durability)

The evaluations of durability were performed by using the evaluation apparatus 1-1 described above.

The cartridge including each of the electrophotographic photosensitive members was mounted on the evaluation apparatus, and a monochromatic letter image having a print percentage of 1% was repeatedly formed on A4 size plain paper. In the repetition of formation of images, the images and the thicknesses of the surface layers of the electrophotographic photosensitive members were appropriately observed, and the number of sheets passed until the minimum thickness capable of securing a satisfactory image output was reached was identified. The results are shown in Table 3.

**Table 3**

| | Total length of cracks [µm] | Residual potential [-V] | Number of sheets passed (Unit: 10,000 sheets) |
|---|---|---|---|
| Example 1 | 0.51 | 40 | 110 |
| Example 2 | 0.65 | 38 | 90 |
| Example 3 | 0.44 | 46 | 115 |
| Example 4 | 0.52 | 40 | 110 |
| Example 5 | 0.53 | 41 | 105 |
| Example 6 | 0.53 | 41 | 105 |
| Example 7 | 0.78 | 49 | 100 |
| Example 8 | 0.56 | 45 | 105 |
| Example 9 | 0.46 | 48 | 105 |
| Example 10 | 0.52 | 40 | 110 |
| Example 11 | 0.69 | 50 | 95 |
| Example 12 | 0.82 | 42 | 105 |
| Example 13 | 0.91 | 44 | 105 |
| Example 14 | 1.05 | 65 | 100 |
| Example 15 | 1.12 | 62 | 100 |
| Example 16 | 1.24 | 70 | 95 |
| Example 17 | 1.33 | 74 | 90 |
| Example 18 | 0.83 | 65 | 100 |
| Example 19 | 0.91 | 75 | 100 |
| Example 20 | 0.95 | 81 | 95 |
| Example 21 | 1.28 | 80 | 85 |
| Example 22 | 1.31 | 78 | 85 |
| Example 23 | 1.03 | 59 | 80 |
| Example 24 | 0.98 | 63 | 79 |
| Example 25 | 2.14 | 58 | 75 |
| Example 26 | 1.36 | 44 | 69 |
| Example 27 | 1.82 | 65 | 95 |
| Example 28 | 0.85 | 51 | 85 |
| Example 29 | 0.93 | 53 | 85 |
| Example 30 | 0.78 | 75 | 85 |
| Example 31 | 0.82 | 79 | 85 |
| Example 32 | 1.76 | 58 | 80 |
| Example 33 | 1.47 | 71 | 80 |
| Example 34 | 2.38 | 65 | 75 |
| Comparative Example 1 | 5.66 | 58 | 100 |
| Comparative Example 2 | 6.27 | 61 | 100 |
| Comparative Example 3 | 1.05 | 150 | 95 |
| Comparative Example 4 | 1.21 | 155 | 95 |
| Comparative Example 5 | 1.19 | 155 | 90 |
| Comparative Example 6 | 7.86 | 63 | 100 |
| Comparative Example 7 | 8.49 | 72 | 100 |

According to one aspect of the present disclosure, the electrophotographic photosensitive member, which is excellent in cleaning property and durability, and in which residual potential is reduced and a crack is suppressed, can be provided.

While the present disclosure has been described with reference to exemplary embodiments, it is to be understood that the disclosure is not limited to the disclosed exemplary embodiments. The scope of the following claims is to be accorded the broadest interpretation so as to encompass all such modifications and equivalent structures and functions.

## Claims

1. An electrophotographic photosensitive member comprising:
a surface layer,
wherein the surface layer contains:
a binder resin; and
organic resin particles,
wherein the binder resin contains a resin having a structural unit represented by formula (A) or (B), and
wherein the organic resin particles are each subjected to surface treatment with a compound represented by formula (C) or (D): 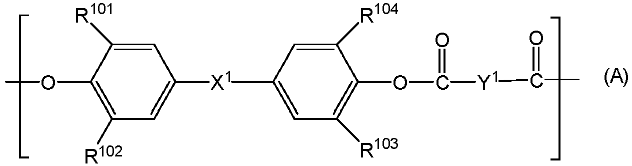 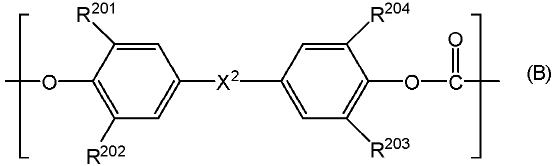 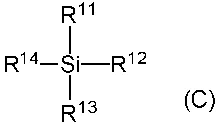 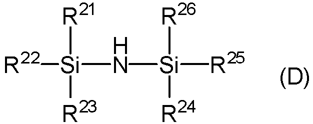
in the formula (A), R¹⁰¹ to R¹⁰⁴ each independently represent a hydrogen atom or a methyl group, X¹ represents a methylene group that may have an alkyl group or a phenyl group as a substituent, a cyclohexylidene group, an oxygen atom, or a single bond, and Y¹ represents a m-phenylene group, a p-phenylene group, or a divalent group obtained by bonding two p-phenylene groups through an oxygen atom;
in the formula (B), R²⁰¹ to R²⁰⁴ each independently represent a hydrogen atom or a methyl group, and X² represents a methylene group that may have an alkyl group or a phenyl group as a substituent, a cyclohexylidene group, an oxygen atom, or a single bond;
in the formula (C), R¹¹ to R¹⁴ each independently represent an alkyl group, a phenyl group, an alkoxy group, or a halogen atom,
at least one of R¹¹ to R¹⁴ represents an alkoxy group or a halogen atom; and
in the formula (D), R²¹ to R²⁶ each independently represent an alkyl group or a phenyl group.

2. The electrophotographic photosensitive member according to claim 1, wherein a content of the organic resin particles in the surface layer is 1 mass% or more and 30 mass% or less with respect to a total mass of the surface layer.

3. The electrophotographic photosensitive member according to claim 1 or 2, wherein an average primary particle diameter serving as an arithmetic average of long diameters of primary particles of the organic resin particles in the surface layer is 10 nm or more and 300 nm or less.

4. The electrophotographic photosensitive member according to any one of claims 1 to 3,
wherein a content of the organic resin particles in the surface layer is 1 mass% or more and 30 mass% or less with respect to a total mass of the surface layer, and
wherein an average primary particle diameter serving as an arithmetic average of long diameters of primary particles of the organic resin particles in the surface layer is 10 nm or more and 300 nm or less.

5. The electrophotographic photosensitive member according to any one of claims 1 to 4, wherein a content of silicon atoms each derived from the compound represented by the formula (C) or (D) in the surface layer is 0.003 atomic% or more and 0.3 atomic% or less with respect to a total number of atoms excluding hydrogen atoms in the surface layer.

6. The electrophotographic photosensitive member according to any one of claims 1 to 5, wherein the organic resin particles in the surface layer each have a structural unit represented by formula (E): 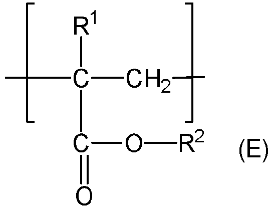 in the formula (E), R¹ represents a hydrogen atom or a methyl group, and R² represents an alkyl group that may have a substituent.

7. The electrophotographic photosensitive member according to any one of claims 1 to 6, wherein at least one of R¹¹ to R¹⁴ in the formula (C) represents an alkyl group having 6 or more and 12 or less carbon atoms.

8. The electrophotographic photosensitive member according to any one of claims 1 to 7, wherein the binder resin in the surface layer has a structural unit represented by formula (F) or (G): 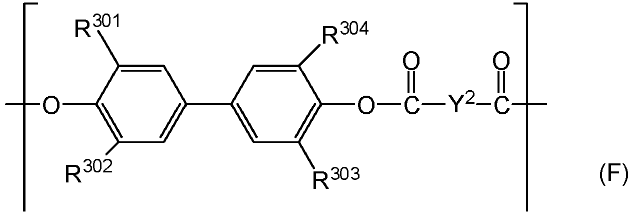 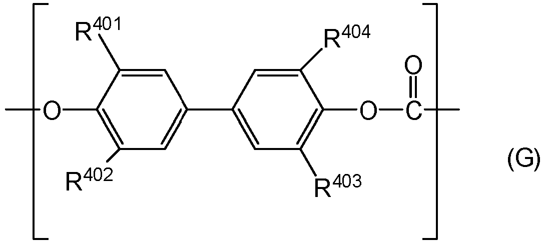
in the formula (F), R³⁰¹ to R³⁰⁴ each independently represent a hydrogen atom or a methyl group, and Y² represents a m-phenylene group, a p-phenylene group, or a divalent group obtained by bonding two p-phenylene groups through an oxygen atom; and
in the formula (G), R⁴⁰¹ to R⁴⁰⁴ each independently represent a hydrogen atom or a methyl group.

9. A process cartridge comprising:
the electrophotographic photosensitive member of any one of claims 1 to 8; and
at least one unit selected from the group consisting of: a charging unit; a developing unit; and a cleaning unit,
the process cartridge integrally supporting the electrophotographic photosensitive member and the at least one unit, and being detachably attachable to a main body of an electrophotographic apparatus.

10. An electrophotographic apparatus comprising:
the electrophotographic photosensitive member of any one of claims 1 to 8;
a charging unit;
an image exposing unit;
a developing unit; and
a transfer unit.
